# EUROPEAN PATENT SPECIFICATION

(11) **EP 2 397 351 B1**
(45) Date of publication and mention of the grant of the patent: **23.10.2013**
(21) Application number: 11170401.1
(22) Date of filing: 17.06.2011
(51) Int. Cl.: B60J 1/00, B60J 5/04, B60J 9/00

(54) **Breaking of a window and unlocking of a door when a vehicle falls into water**
Einschlagen eines Fensters und Entriegeln einer Tür wenn ein Fahrzeug ins Wasser fällt
Bris d'une vitre et déverrouillage d'une porte en cas de chute d'un véhicule dans l'eau

(30) Priority: 21.06.2010 NL 2004933
(43) Date of publication of application: 21.12.2011
(73) Proprietor: Hendriksma, Jacob, 1032 KK Amsterdam (NL)
(72) Inventor: Hendriksma, Jacob, 1032 KK Amsterdam (NL); Van der Klein, Sven, 1531 PR Wormer (NL)
(74) Representative: Visser-Luirink, Gesina

(56) References cited:
- DE-A1- 19 757 641
- JP-A- 2005 335 640
- US-A- 5 413 247
- US-A1- 2006 012 217
- US-A1- 2006 255 084
- US-A1- 2007 265 753

## Description

The invention relates to a device for breaking a window of a vehicle and/or opening a door of a vehicle, and to application thereof.

Such a device is known from US patent application 2006255084, which describes a remote-operated device for breaking a window. US patent 6551159 describes a system of instruments useful in evacuating a car, including a small hammer for breaking glass. The Japanese patent rights 2004352214 and 11139230 also describe apparatus suitable for breaking a car window. Described in US patent application 20060012217 is a system wherein, when a vehicle enters water, the windows which are usually operated electrically can be opened manually and the door locks can be opened by means of pushing a button or pulling a handle These instruments have in common that they must all be operated manually. This also applies to the system described in JP 1118860, wherein glass of a car which has fallen into water can be broken.

It is generally known that it is far from easy to break a window and/or open a door in a vehicle which has fallen into water, especially when this must be done by a person who has been injured during entry of the vehicle into the water. There is therefore a need for a device which automatically breaks a window and/or opens a door when a vehicle falls into water, which device is provided by the present invention.

In inflatable life-jackets use is made of a pin which is held in place using a water-soluble tablet and a coil spring, as described for instance in US patent 5,413,247 or US patent 4,267,944. When it comes into contact with water the tablet dissolves, the coil spring shoots against the pin which breaks open a gas cartridge, after which the life-jacket is automatically inflated. It has been found that such a combination of coil spring, pin, water-soluble tablet and gas cartridge, wherein a simplified embodiment operates well enough, together with one or more gas cylinders provided with piston and piston rod, can be utilized surprisingly well for the purpose of the invention, i.e. to break a vehicle window and/or open a vehicle door when a vehicle falls into water.

The present invention has for its object to provide a device of the type stated in the preamble, comprising a water-soluble solid substance, wherein at least during operation the gas is released from a gas cartridge (7) when the solid substance dissolves in water, wherein the gas cartridge (7) is connected to a gas cylinder (9) via a gas hose (8) on the side of the piston (10), wherein the piston rod (11) points in the direction of the window of the vehicle and breaks the glass of the window.

According to a further embodiment of the invention the gas cartridge (7) is connected to a gas cylinder (12) via a gas hose (8) on the side of the piston rod (14) of the piston (13), wherein the piston rod (14) is connected to a rod (15) which is connected on the one side to a door handle (18) and optionally on the other side to the lock (19) of a door of the vehicle. According to one of the embodiments of the invention, a device is therefore provided wherein, in addition to a window of a vehicle being broken, one of the vehicle doors is also opened. In this device the gas hose (8) is connected on the side of the piston rod (14) of the piston (13) to a second gas cylinder (12), wherein the piston rod (14) is connected to a rod (15) which is connected on the one side to a door handle and on the other side to the lock (19) of the same vehicle door of the vehicle.

The invention further provides another embodiment which, in respect of breaking the window, is formed by a device for breaking the window of a plurality of doors of a vehicle, comprising two or more gas cylinders (9), each connected on the side of the associated piston (10) to the gas hose (8), and each with a piston rod (11) pointing in the direction of different windows of the vehicle.

The invention subsequently provides an embodiment which, in respect of unlocking the door, is formed by a device for unlocking a plurality of doors of a vehicle, comprising two or more gas cylinders (12) on the side of the associated piston rod (14) of the piston (13) connected to the gas hose (8), wherein each piston rod (14) is connected to each of a rod (15) associated with different doors of the vehicle, which rod is connected on the one side to a door handle (18) and/or on the other side to the lock (19) of the same door of the vehicle.

Finally, the invention provides a method for breaking at least one window of a vehicle when the vehicle falls into water, wherein the device is set into operation when the water-soluble substance present in the device according to the invention comes into contact with water. The invention also provides a method for unlocking at least one door, optionally in addition to breaking at least one window, when a vehicle falls into water, wherein the device is set into operation when the water-soluble substance present in the device, in which a gas cylinder is also present which is connected to the door handle and optionally the lock of the vehicle door, comes into contact with water.

The invention therefore provides a device wherein at least one window is broken, at least one door is opened, or both, when a vehicle falls into water.

In the present application a vehicle is understood to mean, in addition to car, any vehicle suitable for the device of the invention, such as for instance a truck or bus having for instance a plurality of windows and doors. In the present application a window or door or vehicle door must also be understood to mean the rear window or the door of the trunk.

The water-soluble substance is preferably able to withstand a humid environment, such as can for instance occur during wet weather, or can be made to withstand it using additional measures. The gas cartridge is for instance protected by means of a sleeve or cover, so that water can only run into it from the underside and only then come into contact with the water-soluble substance. The gas used from the gas cartridge is not critical, it being possible for instance to envisage carbon dioxide or air, or also liquid under pressure, wherein flammable compounds are of course not suitable. When a vehicle door is unlocked, the unlocking of the door can then take place via the door handle and/or the lock. The rod can be of metal or a synthetic material such as plastic, although a cord, such as of rope, could also be used.

The present invention is further elucidated with reference to the following drawings of the device with a preferred embodiment of a device which produces gas in simple manner upon contact with water:

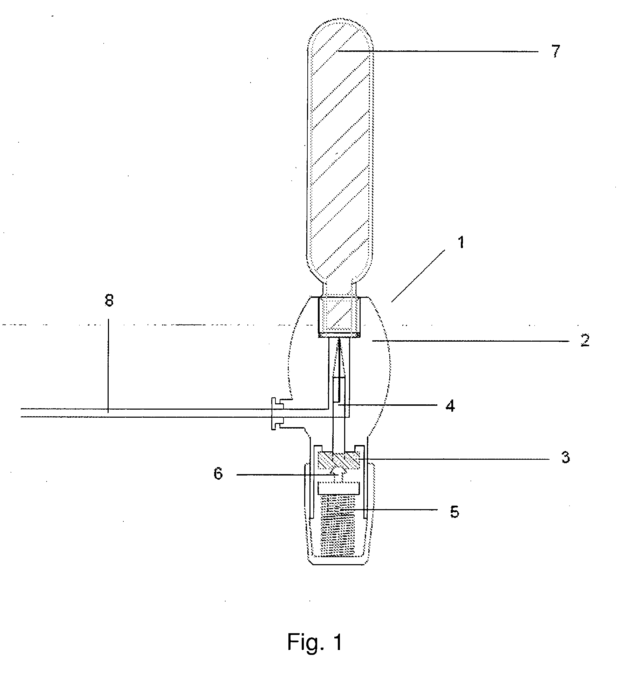

Figure 1 shows a front view of an embodiment of a known device (1) which produces gas in water and comprises a container (2) with a water-soluble solid substance (3), a striking pin (4) connected thereto and a coil spring (5), a gas cartridge (7) at a distance from the striking pin such that when the solid substance (3) dissolves the support pin (6) shoots upward, wherein the striking pin (4) penetrates the gas cartridge (7), which gas cartridge (7) is connected to a gas hose (8).

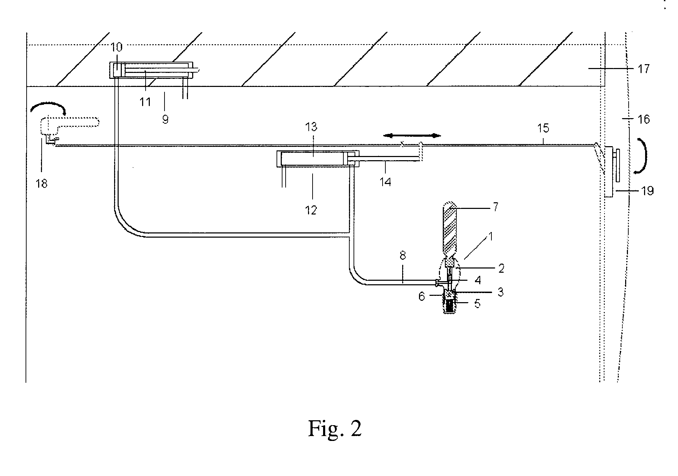

Figure 2 shows a front view of a vehicle door (16) with window (17), a device which produces gas in water, as shown on a large scale in Figure 1, which is connected to a gas cylinder (9) via a gas hose (8) on the side of the piston (10), wherein the piston rod (11) points in the direction of the window (17) of the vehicle and wherein gas hose (8) is connected to a second gas cylinder (12) on the side of the piston rod (14) of the piston (13) and wherein the piston rod (14) is connected to a rod (15) which is connected on the one side to a door handle (18) and on the other side to the lock (19) of the same vehicle door (16).

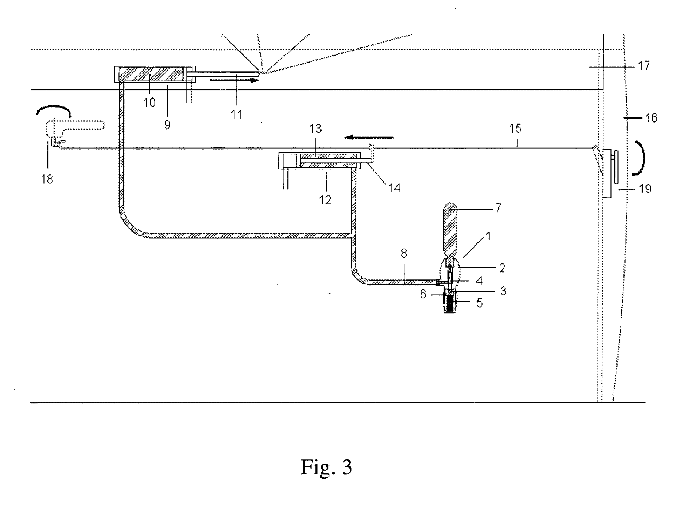

Figure 3 shows a front view of a vehicle door (16) with window (17), a device which produces gas in water as shown in Figure 1, but here in use, which is connected via a gas hose (8) to a gas cylinder (9) on the side of the piston (10), wherein the piston rod (11) breaks the window (17) of the vehicle and wherein gas hose (8) is connected on the side of the piston rod (14) of the piston (13) to a second gas cylinder (12) and wherein the piston rod (14) is connected to a rod (15) which is connected on the one side to a door handle (18) and on the other side to the lock (19) of the same vehicle door (16), and wherein the door handle (18) is pulled or shifted downward and the door (16) is unlocked as indicated with the arrows.

The figures are for the most part schematic and not drawn to scale. Corresponding parts are designated in the figures with the same reference numerals.

Figure 1 shows a detail view of a device which produces gas wherein, as soon as the water-soluble solid substance (3) comes into contact with water and dissolves, the compressed coil spring (5) releases, the support pin (6) shoots upward and the striking pin (4) breaks open the gas cartridge (7), wherein the gas is distributed via the gas hose (8). In this and other embodiments the striking pin is particularly arrow-shaped, but can also take a flat form. The water-soluble solid substance is preferably present in tablet form and more preferably comprises salt, sugar or paper.

Figure 2 shows how the gas cartridge is connected via the gas hose (8) to at least one gas cylinder (9) on the side of the piston (10), wherein the piston rod (11) points in the direction of the window. In the shown embodiment the gas hose (8) is also connected on the side of the piston rod (14) of the piston (13) to a second gas cylinder (12), wherein the piston rod (14) is connected to a rod (15) which is connected on the one side to a door handle (18) and on the other side to the lock (19) of the same vehicle door (16).

Also forming part of the invention is the embodiment with more than one gas cylinder aimed at the same or a plurality of windows in the vehicle (it is for instance possible here to envisage a central location in the vehicle for the device producing gas in water) and/or more than one gas cylinder, the piston rod of which is connected to a rod which is connected on the one side to a door handle, each of a different vehicle door, and on the other side in each case to the lock of the same vehicle door.

Figure 3 shows the embodiment shown in figure 2 in operation. Due to the water-soluble substance (4) being dissolved the gas spreads through the gas hose (8) to the gas cylinder (9), where the piston (10) with piston rod (11) is pressed toward the window so that the window bursts open. The gas also flows to the gas cylinder (12), where piston (13) with piston rod (14) is conversely driven into the gas cylinder (12), wherein the rod (15) which is connected to the lever of the lock (19) pulls this lever downward. The rod (15) is
connected on the other side to the door handle (18) which is pulled downward due to the rod being pulled, whereby the lock (19) of the vehicle door is opened. When the gas cylinder is actuated by means of air, the gas cylinder (12) pulls or pushes the rod (15) back, whereby the lock is opened.

Finally, it must be expressly stated that preferred embodiments of the invention are described in the present patent application and that further modifications and the like are of course possible without limiting the scope of protection of this patent specification.

## Claims

1. Device for breaking a window of a vehicle comprising a water-soluble solid substance, wherein at least during operation the gas is released from a gas, cartridge (7) when the solid substance dissolves in water, wherein
the gas cartridge (7) is connected to a gas cylinder (9) via a gas hose (8) on the side of the piston (10), wherein the piston rod (11) points in the direction of the window of the vehicle and breaks the glass of the window.

2. Device for breaking a window of a vehicle according to claim 1 further **characterized by** opening a door of a vehicle the gas cartridge (7) being connected to a gas cylinder (12) via a gas hose (8) on the side of the piston rod (14) of the piston (13), wherein the piston rod (14) is connected to a rod (15) which is connected on the one side to a door handle (18) and optionally on the other side to the lock (19) of a door of the vehicle.

3. Device according to claim 1 or 2 for breaking the window of a plurality of doors of a vehicle, comprising two or more gas cylinders (9) connected on the side of the piston (10) to the gas hose (8) and each having a piston rod (11) pointing in the direction of different windows of the vehicle.

4. Device according to claim 2 or 3 for unlocking a plurality of doors of a vehicle, comprising two or more gas cylinders (12) connected on the side of the piston rod (14) of the piston (13) to the gas hose (8), wherein each piston rod (14) is connected to each of a rod (15) associated with different doors of the vehicle, which rod is connected on the one side to a door handle (18) and/or on the other side to the lock (19) of the same door of the vehicle.

5. Method for breaking at least one window of a vehicle and optionally unlocking at least one door when the vehicle falls into water, wherein the device according to one or more of the claims 1-4 is set into operation when the water-soluble substance present in the device comes into contact with water.

## Patentansprüche

1. Vorrichtung zum Brechen eines Fensters eines Fahrzeugs, das einen wasserlöslichen Feststoff umfasst, wobei wenigstens im Betrieb das Gas aus einer Gaspatrone (7) abgegeben wird, wenn sich der Feststoff in Wasser auflöst, wobei die Gaspatrone (7) über einen Gasschlauch (8) auf der Seite des Kolbens (10) mit einem Gaszylinder (9) verbunden ist, wobei die Kolbenstange (11) in Richtung des Fensters des Fahrzeugs zeigt und das Glas des Fensters bricht.

2. Vorrichtung zum Brechen eines Fensters eines Fahrzeugs gemäß Anspruch 1, ferner **gekennzeichnet durch** das Öffnen einer Tür eines Fahrzeugs, wobei die Gaspatrone (7) über einen Gasschlauch (8) auf der Seite der Kolbenstange (14) des Kolbens (13) mit einem Gaszylinder (12) verbunden ist, wobei die Kolbenstange (14) mit einer Stange (15) verbunden ist, die auf der einen Seite mit einem Türgriff (18) und gegebenenfalls auf der anderen Seite mit dem Schloss (19) einer Tür des Fahrzeugs verbunden ist.

3. Vorrichtung gemäß Anspruch 1 oder 2 zum Brechen des Fensters einer Mehrzahl von Türen eines Fahrzeugs, die zwei oder mehrere Gaszylinder (9) umfasst, die auf der Seite des Kolbens (10) mit dem Gasschlauch (8) verbunden sind und die jeweils eine Kolbenstange (11) aufweisen, die in Richtung unterschiedlicher Fenster des Fahrzeugs zeigen.

4. Vorrichtung gemäß Anspruch 2 oder 3 zum Entriegeln einer Mehrzahl von Türen eines Fahrzeugs, die zwei oder mehrere Gaszylinder (12) umfasst, die auf der Seite der Kolbenstange (14) des Kolbens (13) mit dem Gasschlauch (8) verbunden sind, wobei jede Kolbenstange (14) mit jeder Stange (15) in Zuordnung zu unterschiedlichen Türen des Fahrzeugs verbunden ist, wobei die Stange auf der einen Seite mit einem Türgriff (18) und/oder auf der anderen Seite mit dem Schloss (19) derselben Tür des Fahrzeugs verbunden ist.

5. Verfahren zum Brechen wenigstens eines Fensters eines Fahrzeugs und gegebenenfalls zum Entriegeln wenigstens einer Tür, wenn das Fahrzeug ins Wasser fällt, wobei die Vorrichtung gemäß einer oder mehreren der Ansprüche 1 - 4 in Betrieb gesetzt wird, wenn der in der Vorrichtung vorhandene wasserlösliche Feststoff in Kontakt mit Wasser kommt.

## Revendications

1. Dispositif permettant de briser une vitre d'un véhicule, comprenant une substance solide soluble dans l'eau, le gaz étant libéré d'une cartouche (7) au moins pendant le fonctionnement lorsque la substance solide se dissout dans l'eau, la cartouche de gaz (7) étant reliée à un cylindre de gaz (9) via un flexible de gaz (8) sur le côté du piston (10), la tige de piston (11) pointant dans la direction de la vitre du véhicule dont elle brise la glace.

2. Dispositif permettant de briser une vitre d'un véhicule selon la revendication 1, **caractérisé en outre en ce qu'**à l'ouverture d'une porte d'un véhicule, la cartouche de gaz (7) est reliée à un cylindre de gaz (12) via un flexible de gaz (8) sur le côté de la tige (14) du piston (13), la tige de piston (14) étant reliée à une tige (15) elle-même reliée d'un côté à une poignée de porte (18) et, optionnellement, de l'autre côté à la serrure (19) d'une porte du véhicule.

3. Dispositif selon la revendication 1 ou 2 permettant de briser la vitre d'une pluralité de portes d'un véhicule, comprenant deux cylindres de gaz (9) ou plus reliés sur le côté du piston (10) au flexible de gaz (8), chacun ayant une tige de piston (11) pointant dans la direction de différentes vitres du véhicule.

4. Dispositif selon la revendication 2 ou 3 pour déverrouiller une pluralité de portes d'un véhicule, comprenant deux cylindres de gaz (12) ou plus reliés sur le côté de la tige (14) de piston (13) au flexible de gaz (8), chaque tige de piston (14) étant reliée à chacune d'une tige (15) associée à différentes portes du véhicule, ladite tige étant reliée d'un côté à une poignée de porte (18) et/ou de l'autre côté à la serrure (19) de cette même porte du véhicule.

5. Procédé permettant de briser au moins une vitre d'un véhicule et, optionnellement, de déverrouiller au moins une porte en cas de chute du véhicule dans l'eau, et dans lequel le dispositif, selon une ou plusieurs des revendications 1 à 4, est activé lorsque la substance soluble dans l'eau présente dans le dispositif vient au contact de l'eau.
